# EUROPEAN PATENT APPLICATION

(11) **EP 1 624 222 A1**
(43) Date of publication of application: **08.02.2006**
(21) Application number: 04728704.0
(22) Date of filing: 21.04.2004
(51) Int. Cl.: F16F 15/08

(54) **VIBRATION-ISOLATING DEVICE**

(30) Priority: 15.05.2003 WO PCT/JP03/06087
(71) Applicant: TOYO TIRE & RUBBER CO., LTD ., Osaka-shi, Osaka 550-0002 (JP)
(72) Inventor: YAMAMOTO, Hikofumi, c/o Toyo Tire & Rubber Co. Ltd, Osaka-shi, Osaka 550-0002 (JP); IHARA, Yoshio, c/o Toyo Tire & Rubber Co. Ltd., Osaka-shi, Osaka 550-0002 (JP)
(74) Representative: Leson, Thomas Johannes Alois
(86) International application number: PCT/JP2004/005753
(87) International publication number: WO 2004/102035

(57) **Abstract**

In a vibration isolation device comprising an inner cylinder (10), an outer periphery member (12) surrounding its outer periphery, and a vibration-isolating base body (14) made of rubber elastomer interconnecting both, in order to effectively enhance the durability without altering the basic performance as a vibration isolator, weight and cost, such a convex streak (68) is provided at least at the one axial end face of the vibration-isolating base body (14) that extends circumferentially along the outer peripheral edge of the inner cylinder (10) and protrudes in the axial direction beyond the axial end face of the inner cylinder, and the convex streak is brought to an axially compressed condition by an abutment face portion (42) of a stopper member (18) disposed to abut on the axial end face of the inner cylinder (10).

## Description

### Technical Field

This invention relates to a vibration isolation device which insulates vibrations and noises.

### Background Art

Hitherto a vibration isolation device has been used for vehicles such as automobiles so as not to transmit vibrations from an engine, suspension parts, etc. which are a vibrating body to a support such as a vehicle body. For such vibration isolating device, there exists the one that is comprised of an inner cylinder, an outer periphery member, e.g., an outer cylinder surrounding the outer periphery of the inner cylinder, and a vibration-isolating base body made of rubber elastomer vulcanization bonded to the outer peripheral surface of the inner cylinder to resiliently connect the inner cylinder and the outer periphery member, and in this connection, a variety of configurations have been proposed (e.g., JP UM Application Publication 46-29289 U, JP UM Application Publication 57-134 U, JP UM Application Publication 59-145408 U, JP Patent Application Publication 62-35126 A, JP Patent Application Publication 2000-74115 A, JP Patent Application Publication 2002-147512 A, etc.).

Here, where the vibration-isolating base body is bonded by vulcanization to the outer peripheral surface of the inner cylinder, there is a problem in that the vicinity of the bonded part at an axial end face of the vibration-isolating base body to the inner cylinder is liable to be insufficient in durability, with the result that cracks develop in the rubber at this part by long-term use.

On the other hand, in JP UM Application Publication 4-113344 U and JP UM Application Publication 62-126635 U relating to a vibration isolation device of this kind which comprises the inner cylinder and the outer periphery member, both connected by the vibration-isolating base body made of rubber elastomer interposed between the both, there is disclosed the technology that an axial end face of the vibration-isolating base body is provided to axially protrude beyond the end face of the inner cylinder, and the protruded end face of the vibration-isolating base body is axially compressed by an abutment member disposed to abut on the end face of the inner cylinder However, the technology disclosed in these documents consists in that the axial end face of the vibration-isolating base body is protruded over the radial entirety thereof and assembled into the axially compressed state by the abutment member. Because of that, it follows that the vibration-isolating base body is pre-compressed (pre-loaded) in its radial entirety, which necessarily entails alteration in basic performance as a vibration isolator due to the pre-compression, as well.

### Disclosure of Invention

In view of the issues as stated above, the present invention has been made, and it is an object of the invention to provide a vibration isolation device capable of enhancing effectively the durability without altering the basic performance as a vibration isolator, weight, cost, and the like.

The vibration isolation device of the invention comprises an inner cylinder, an outer periphery member surrounding an outer periphery of the inner cylinder, a vibration-isolating base body made of rubber elastomer bonded by vulcanization to the outer peripheral surface of the inner cylinder to interconnect the inner cylinder and the outer periphery member, and an abutment member disposed to abut on an axial end face of the inner cylinder, wherein the vibration-isolating base body is provided, at least at the one axial end face thereof, with a convex streak that is axially compressible by means of the abutment member, the convex streak is provided restrictedly on an edge portion in the vicinity of the inner cylinder at the axial end face of the vibration-isolating base body such that the convex streak is formed to extend in the circumferential direction along an outer peripheral edge of the inner cylinder and to protrude in the axial direction beyond the axial end face of the inner cylinder, and is compressed in the axial direction by the abutting disposition of the abutment member on the axial end face of the inner cylinder.

Thus in this invention, because the convex streak axially protruding is provided on the inner peripheral edge portion at the axial end face of the vibration-isolating base body and assembled in an axially compressed state by the abutment member disposed to abut on the axial end face of the inner cylinder, it is possible to pre-compress the vicinity of the bonded part of the vibration-isolating base body to the inner cylinder thereby to enhance the durability remarkably. Moreover because this convex streak is provided restrictedly at the edge portion in the vicinity of the inner cylinder, not over the entirety of the axial end face of the vibration-isolating base body and accordingly, a pre-compression restricted to that portion can be imparted, it is possible to enhance remarkably the durability without altering the basic performance as a vibration isolation device.

In the vibration isolation device of this invention, the inner cylinder may be provided with a cutout portion over a full circumference of its outer peripheral face at least at the axially one end thereof and the convex streak may be provided on the axial end face of the vibration-isolating base body on the side where the cutout portion is formed. Thereby the durability can be further effectively elevated.

Further in the vibration isolation device of the present invention, the axially one end of the inner cylinder may be provided with the cutout portion, and the axially other end may be formed to be gradually larger in outside diameter toward the tip end.

In the vibration isolation device of the invention, given that the axial height of the convex streak protruding from the end face of the inner cylinder is H1 and the axial breadth of the cutout portion formed from the end face of the inner cylinder is H2, the ratio of H2/H1 may be set in the range of 1 to 3.

Again in the vibration isolation device of the invention, the abutment member may be a stopper member limiting axial displacement of the inner cylinder relative to the outer periphery member.

In the vibration isolation device of the invention, the inner cylinder may be attached on a side of a vibrating body, with its axial direction oriented vertically, the outer periphery member may be provided with an opening surrounding the inner cylinder and attached to a side of a support, and the vibration-isolating base body may be interposed between the inner cylinder and the opening of the outer periphery member to resiliently support the inner cylinder in the vertical direction relative to the outer periphery member.

In this case, more particularly, a cylindrical portion may be extended downwardly from the open edge of the opening at the outer periphery member, the abutment member may include an abutment face portion disposed to abut on the lower end face of the inner cylinder, an inner cylindrical portion extending downwardly from the peripheral edge of the abutment face portion and disposed opposite to and inside the cylindrical portion of the outer periphery member, and an extension portion provided at the lower end of the inner cylindrical portion and extending beneath the cylindrical portion of the outer periphery member to be directed outwardly; a first stopper rubber may be provided between the cylindrical portion of the outer periphery member and the inner cylindrical portion of the abutment member while ensuring a void in the axial direction, thereby forming a first stopper limiting displacements in the horizontal direction of the inner cylinder and the outer periphery member, and a second stopper rubber may be provided between the lower end of the cylindrical portion of the outer periphery member and the extension portion of the abutment member while ensuring a void in the axial direction, thereby forming a second stopper limiting an upward displacement of the inner cylinder relative to the outer periphery member.

### Brief Description of the Drawings

Fig. 1 is a top plan view of a vibration isolation device pertaining to one embodiment of this invention;
Fig. 2 is a bottom plan view of the vibration isolation device above;
Fig. 3 is a side elevational view when viewed from the arrow direction III in Fig.1;
Fig. 4 is a cross-sectiional view taken along IV-IV line in Fig. 1;
Fig. 5 is an enlarged view of the essential part of Fig. 4;
and Fig. 6 is an exploded sectional view of the vibration isolation device above.

### Best Mode for Carrying out the Invention

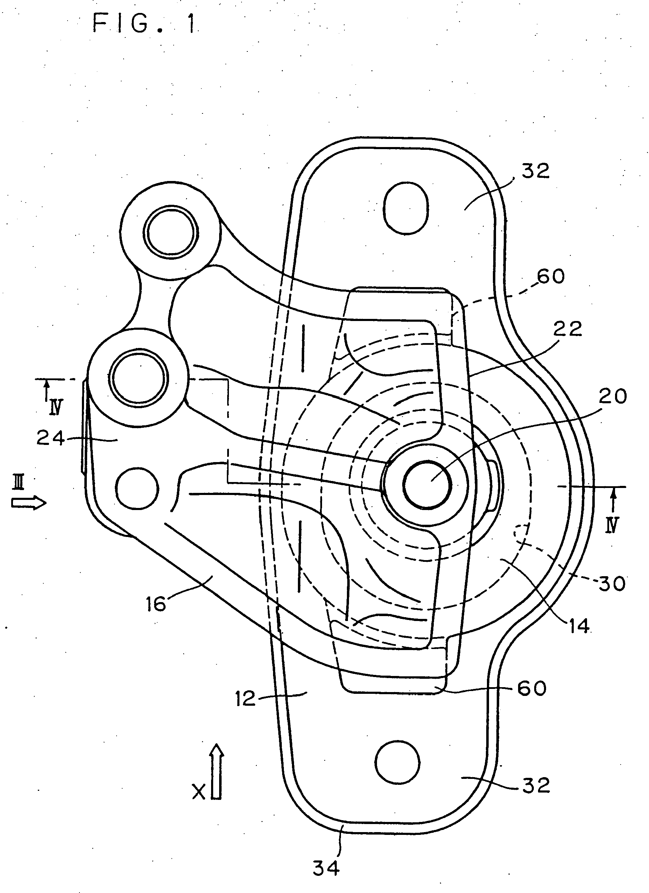

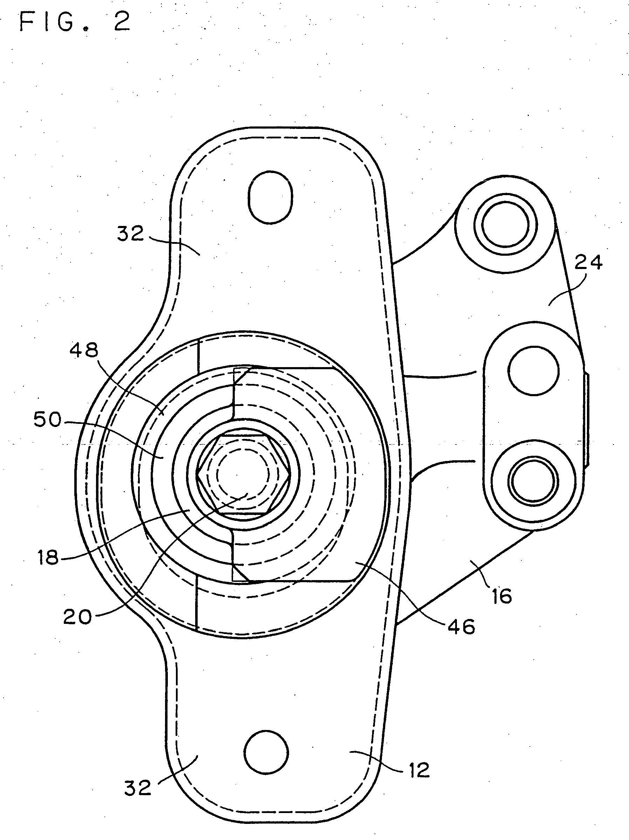

The vibration isolation device relating to one embodiment of the invention will be hereinafter described with reference to Figs. 1 through 6.

The vibration isolation device in this embodiment is an engine mount supporting the right hand section of the engine for a FF vehicle relative to a vehicle body side member in a vibration-absorbing manner. The arrow head direction X in Fig. 1 indicates a front side of the vehicle.

This vibration isolation device includes an inner cylinder 10 made of metal to be attached to a side of an engine 1 which is a vibrating body, an outer periphery member 12 made of metal to be attached to a side of a vehicle body member 2 which is a support body, and a vibration-isolating base body 14 made of rubber elastomer interposed between the inner cylinder 10 and the outer periphery member 12 to connect both in a vibration isolating manner.

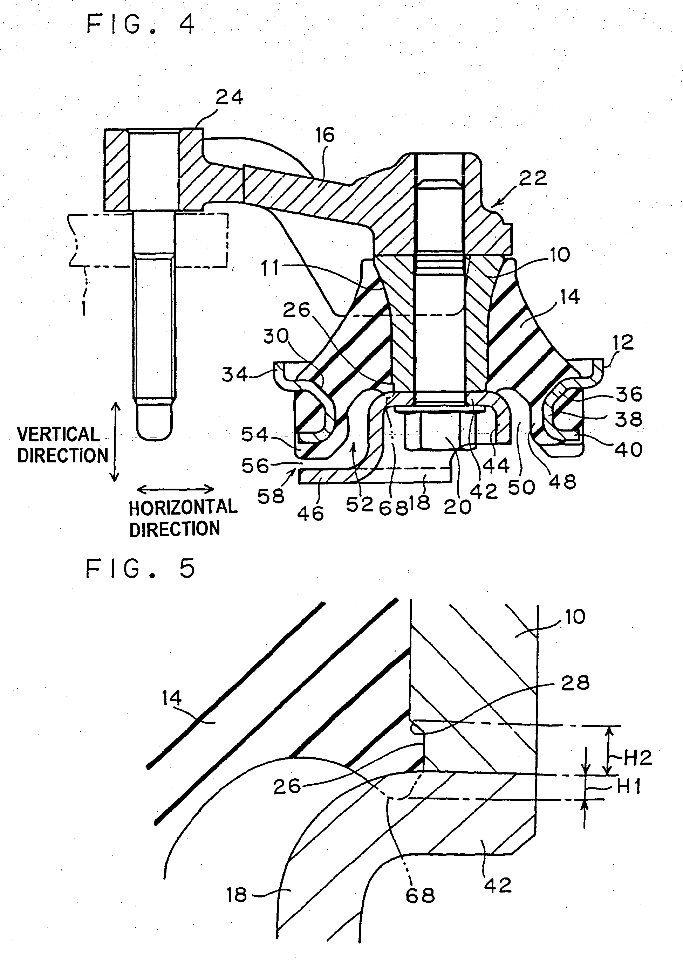

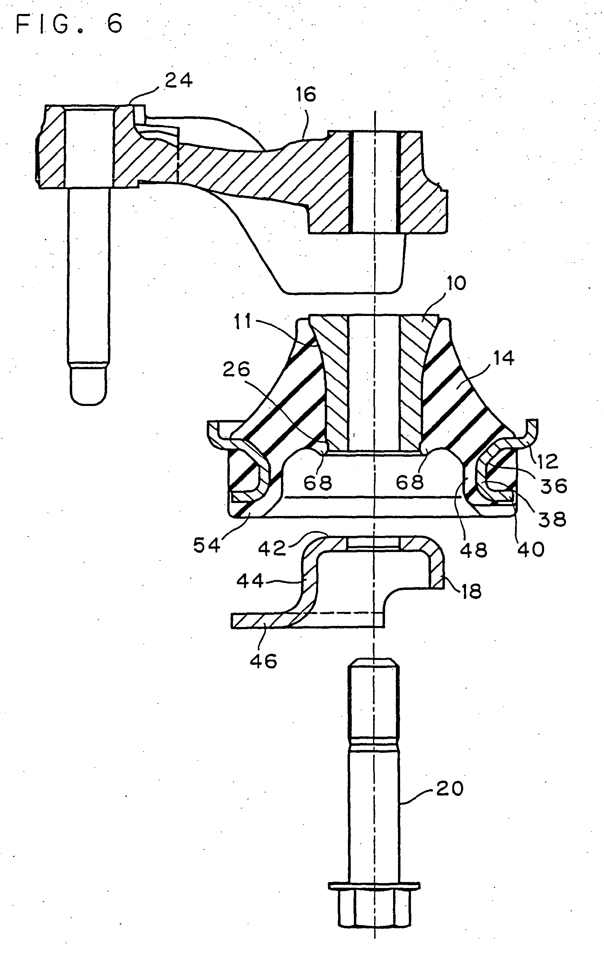

The inner cylinder 10 is disposed with its axial direction oriented in the vertical direction and is equipped at its upper end face with a bracket 16 interconnecting the inner cylinder to the engine 1 and at its lower end face with a stopper member 18 limiting axial displacement of the inner cylinder 10 relative to the outer periphery member 12. These members 10,16, 18 are, as shown in Figs. 4 and 6, locked integrally by means of a bolt 20 inserted from below the stopper member 18 thereby to constitute an attachment member 22 on a side of the vibrating body The bracket 16 is provided with an attachment part 24 to the engine 1 in a position departing from its connecting part to the inner cylinder 10 in the normal direction to the axis.

The inner cylinder 10 is formed, at its upper end portion 11 to be fixed to the bracket 16, in such a reverse taper form that is gradually larger in outside diameter toward its top end. On the other hand, at a lower end portion of the inner cylinder 10 to which the stopper member 18 is fixed, a cutout portion 26 is provided over the full circumference of the outer peripheral surface, as shown in enlarged scale in Fig. 5. The cutout portion 26 is depressed radially inwardly through the intermediary of a step portion 28 provided at the lower end portion of the inner cylinder 10, and the extremity side of the step portion 28 is formed as a small-diameter portion having a small-diameter outer peripheral surface.

The outer periphery member 12 assumes a flat plate form, and is provided with a generally circular opening 30, in which the inner cylinder 10 is inserted from above, at its central part and attachment face parts 32 to the vehide body 2 in two radially opposite places. A peripheral edge portion 34 of the outer periphery member 12 is formed in a flange shape bent upwardly for purposes of reinforcement.

The opening 30 of the outer periphery member 12 surrounds the inner cylinder 10 axially parallel thereto and coaxially, and its opening edge is formed as a tapered face portion 36 that is inclined downwardly more at its inward side to assume a tapered face. Downwardly of a lower end of the tapered face portion 36, a short cylinder-shaped cylindrical portion 38 is extended, and further a lower end of the cylindrical portion 38 is formed as a flange portion 40 bent outwardly.

The vibration-isolating base body 14 assumes a generally umbrella shape surrounding the overall periphery of the inner cylinder 10 to connect the inner cylinder 10 and the opening 30 of the outer periphery member 12 thereby resiliently supporting the inner cylinder 10 to the outer periphery member 12 in the vertical direction. More specifically, the vibration-isolating base body 14 interconnects the tapered face portion 36 of the outer periphery member 12 and the peripheral surface of the inner cylinder 10 located at and upwards of the tapered face portion 36. In this embodiment, the vibration-isolating base body 14 is anchored to both the inner cylinder 10 and the outer periphery member 12 by vulcanization bonding means.

As shown in Fig. 4, the lower end of the inner cylinder 10 is terminated at a height in the proximity of the tapered face portion 36 of the outer periphery member 12, and to the outer peripheral surface of the inner cylinder 10 over the axial entirety thereof, the vibration-isolating base body 14 is bonded by vulcanization.

The stopper member 18 is made up of a disc-shaped abutment face portion 42 disposed to abut on the lower end face of the inner cylinder 10, a short cylinder-shaped cylindrical portion 44 extended downwardly of a peripheral edge of the abutment face portion and disposed inside of the cylindrical portion 38 of the outer periphery member 12 in an opposed manner, and an extension portion 46 in a generally half-disk shape provided at the lower end of the cylindrical portion 44 and extending to be directed radially outwardly beneath the flange portion 40 of the outer periphery member 12, these being integrally fabricated by press working of a metal plate.

Between the cylindrical portion 38 of the outer periphery member 12 and the cylindrical portion 44 of the stopper member 18, a first stopper rubber 48 is provided and a predetermined void (clearance) 50 is ensured in the normal direction to the axis, whereby a first stopper 52 limiting excessive displacements in the horizontal direction of the inner cylinder 10 and the outer periphery member 12 is provided. The first stopper rubber 48 in this embodiment is provided to cover the inner peripheral face of the cylindrical portion 38 of the outer periphery member 12 by the rubber linking from the vibration-isolating base body 14, and the void 50, which is a stopper clearance, is set by a gap between the rubber 48 and the cylindrical portion 44 of the stopper member 18.

On the other hand, between the flange portion 40 of the outer periphery member 12 and the extension portion 46 of the stopper member 18, a second stopper rubber 54 is provided, ensuring a predetermined void 56 in the axial direction, whereby a second stopper 58 limiting an excessive upward displacement of the inner cylinder 10 to the outer periphery member 12 is provided. The second stopper rubber 54 in this embodiment is provided to cover the underside of the flange portion 40 by the rubber linking from the first stopper rubber 48. Here, Fig. 4 indicates the unloaded condition that the second stopper is not loaded by the weight of the engine, and the void 56 will suffice to be set so that a predetermined dimension may be ensured when the weight of the engine is loaded. Consequently upon unloading, the second stopper rubber 54 and the extension portion 46 may abut on each other.

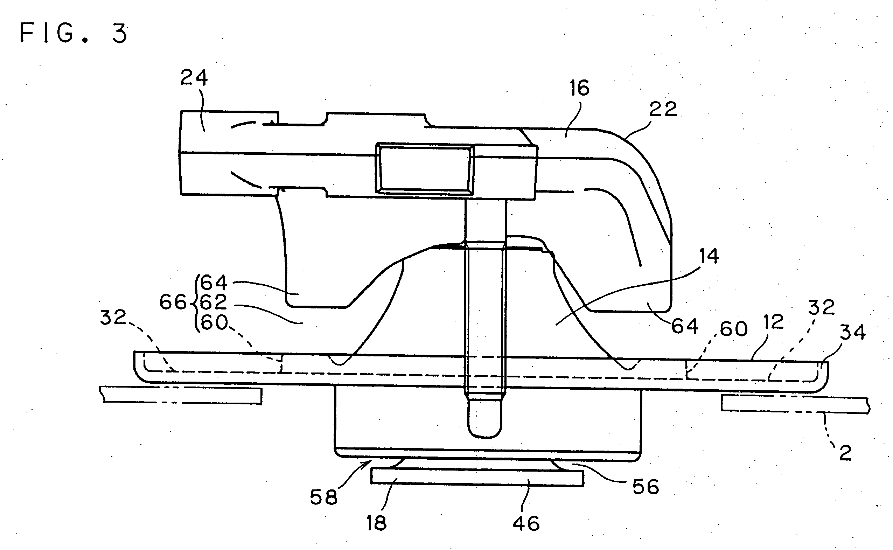

As indicated in Figs. 1 and 3, on the upside of the outer periphery member 12 in the vicinity of the opening 30, there are provided third stopper rubbers 60 in a block form. The third stopper rubbers 60 are provided in respective regions ranging from the opening 30 of the outer periphery member 12 to the attachment face portions 32 to the vehicle body located in two places outside of the opening, and are formed by the rubber linking from the vibration-isolating base body 14. On the bracket 16, stopper receiving portions 64 facing the respective third rubber stoppers 60 through a predetermined void 62 are provided so as to project downwardly. Each of the third stopper rubbers 60 and each of the stopper receiving portions 64 jointly constitute a third stopper 66 limiting a downward displacement of the inner cylinder 10 to the outer periphery member 12. In Fig. 3 the third stopper 66 is likewise indicated in its unloaded condition that the weight of the engine is not loaded, and the void 62 between the third stopper rubber 60 and the stopper receiving portion 64 suffices to be set so that a predetermined dimension can be ensured upon loading of the engine.

In the vibration isolation device so constructed, in this embodiment, on the axially lower end surface of the vibration-isolating base body 14, there is provided a convex streak 68 that extends in the circumferential direction along the outer peripheral edge of the lower end face of the inner cylinder 10 and projects axially downwardly beyond the lower end face of the inner cylinder 10, particularly as shown in Figs. 5 and 6.

More specifically, the convex streak 68 is provided at an inner peripheral edge portion at the lower end face of the vibration-isolating base body 14, namely at the edge portion close to the inner cylinder 10 over the entire periphery thereof by the rubber integral with the vibration-isolating base body 14 covering the outer peripheral surface of the inner cylinder 10 up to its lower end. As a consequence, the convex streak 68 is provided restrictedly to the edge portion in the vicinity of the inner cylinder 10, not the entirety of the lower end face of the vibration-isolating base body 14. The convex streak 68 is preferably provided to be close to the inner cylinder 10 as far as possible from the viewpoint of durability. In this example, the convex streak 68 is configured so that its slant face may be directed outwardly and axially downwardly from its interface to the inner cylinder 10 to stand up.

Here, if the convex streak 68 is provided so as to cover the lower end face of the inner cylinder 10, when the stopper member 18 is assembled, the rubber will be pinched between the abutment face portion 42 and the inner cylinder 10 with the result that the bolt 20 locked will be loosened due to permanent set of the rubber with the lapse of time. For that reason, it is preferred that the convex streak 68 be provided so as not to ride on the lower end face of the inner cylinder 10.

A projecting height H1 of the convex streak 68 from the lower end face of the inner cylinder 10 is not particularly limited. For instance, with the engine mount in this embodiment, a remarkable durability enhancing effect can be obtained even in the projecting height H1 of on the order of 1 mm, and consequently, a preferred projecting height H1 is about 0.5 to 2 mm.

By assembling of the stopper member 18 onto the lower end face of the inner cylinder 10, this convex streak 68 at the lower end face of the vibration-isolating base body 14 is squashed by the flat abutment face portion 42 of the stopper member 18 to assume an axially compressed condition.

Therefore according to the vibration isolation device of the invention, at the vulcanization bonded end portion of the vibration-isolating base body 14 to the inner cylinder 10 at the lower end face thereof, which is otherwise inferior in durability, the rubber at the vulcanization bonded end portion can be brought into a pre-compressed condition, and consequently, the durability can be remarkably enhanced. More specifically stated, the convex streak 68 as constructed above will make it possible to confer a pre-compression restrictedly to the portion inferior in durability thereby to elevate the durability of this portion, so that it is possible to level up greatly the durability of the overall vibration-isolating base body 14 without altering the vibration isolating characteristics, namely without altering the fundamental performance as a vibration isolator, weight, cost, and the like.

Further in the vibration isolation device in this embodiment, as shown in Fig. 5, the cutout portion 26 is provided over the whole outer peripheral surface at the lower end face of the inner cylinder 10 and the convex streak 68 is provided along the outer peripheral edge of the cutout portion 26. Because of that, when the convex streak 68 is crushed by the stopper member 18, the rubber at the vulcanization bonded end portion can be effectively compressed between the cutout portion 26 and the step portion 28 located at the boundary of the former to the main body of the inner cylinder, with the result that the durability at this portion can be enhanced further remarkably. Besides due to the fact that the lower end portion of the inner cylinder 10 is formed as the cutout portion 26, thereby being made smaller in diameter than the outside diameter of the main body of the inner cylinder, it is possible to ensure a large free length of the lower end face of the vibration-isolating base body 14 in the radial direction as compared with the case where such cutout portion is not provided. This also contributes to the durability.

Here, it is preferred that the breadth H2 of the cutout portion 26 in the axial direction formed from the lower end face of the inner cylinder 10 be set in relation to the projecting height H1 of the convex streak 68 so that the ratio of H2/H1 is in the range of 1 to 3, whereby the compression effect of the vulcanization bonded end portion can be further elevated.

Again in the vibration isolation device in this embodiment, under its use condition, normal vibrations from the engine or vehicle body can be dampened by the vibration-isolating base body 14. And when excessive displacements in the horizontal direction relative to the inner cylinder 10 occur, the cylindrical portion 44 of the stopper member 18 at the first stopper 52 abuts on the cylindrical portion 38 of the outer periphery member 12 through the first stopper rubber 48 whereby stopper action is performed, limiting further displacement At that time, because the first stopper 52 is provided over the full circumference, the stopper action can be performed against excessive displacements in the lateral direction as well as in the fore-and-aft direction of the vehicle.

Further when an excessive displacement in the upward direction relative to the inner cylinder 10 develops, the extension portion 46 of the stopper member 18 at the second stopper 58 abuts on the flange portion 40 located above, whereby a stopper action is performed and further upward displacement is limited.

Still further when a downward excessive displacement relative to the inner cylinder 10 occurs, the stopper receiving portions 64 of the bracket 16 at the third stoppers 66 abut on the third stopper rubbers 60 located below the portions, whereby stopper action is performed, with further downward displacement being limited.

Thus, according to the vibration isolation device in this embodiment, the stopper action limiting excessive displacements in the horizontal direction can be exhibited by the simple configuration provided at the outer periphery member 12 and simultaneously, the stopper action limiting the upward excessive displacement can be exhibited by the compact stopper member 18 fitted to the inner cylinder 10. Therefore despite such a compact and lightweight construction, stopper actions can be exhibited against excessive displacements of the vibration-isolating base body 14 in the upward and horizontal directions.

In particular, in this embodiment, because the inner cylindrical portion 44 is provided on the stopper member 18 so as to constitute the first stopper 52 between the inner cylindrical portion 44 and the cylindrical portion 38 of the outer periphery member 12, the following effect can be attained. That is, here, it is possible to determine the outside diameter of the inner cylindrical portion 44 irrespective of the outside diameter of the inner cylinder 10 and consequently, it is possible to make the lower end portion of the inner cylinder 10 smaller in diameter to make the free length of the rubber at the underside of the vibration-isolating base body 14 longer while ensuring the void 50 of a predetermined dimension for the first stopper 52 at the inner cylindrical portion 44, thus enhancing the durability.

In this embodiment, the first stopper 52 is formed between the cylindrical portion 38 of the outer periphery member 12 and the inner cylindrical portion 44 of the stopper member 18 in this manner, but otherwise where the inner cylinder 10 is disposed opposite to and inside the cylindrical portion 38 of the outer periphery member 12, the first stopper 52 may be formed between the cylindrical portion 38 of the outer periphery member 12 and the inner cylinder 10.

The foregoing embodiment has been so far described with the case where the convex streak 68 is provided only on the lower end face of the vibration-isolating base body 14. Yet it is also possible to provide additionally a similar convex streak on the upper end face of the vibration-isolating base body 14, wherein the convex streak is assembled by axial compression to the underside of the bracket 16, and thereby it is possible to enhance the durability at the upper end face of the vibration-isolating base body 14.

Further in the foregoing embodiment, the example of an engine mount has been described, but this invention is by no means limited to the engine mount only, and also applicable to a variety of vibration isolation bushings, which comprise an inner cylinder, an outer cylinder surrounding it axially parallel, and a vibration-isolating base body interconnecting the inner cylinder and the outer cylinder and are used, for example, for coupling suspension parts.

### Industrial Applicability

According to this invention, it is thus possible to enhance the durability largely without altering the basic performance as a vibration isolation device, weight and cost.

## Claims

1. A vibration isolation device comprising:
an inner cylinder;
an outer periphery member surrounding the outer periphery of the inner cylinder;
a vibration-isolating base body made of rubber elastomer bonded by vulcanization to the outer peripheral surface of the inner cylinder to interconnect the inner cylinder and the outer periphery member;
and an abutment member disposed to abut on an axial end face of the inner cylinder,
which is **characterized in that** the vibration-isolating base body is provided at least at its one axial end face with a convex streak compressed axially by the abutment member;
the convex streak is provided restrictedly to an edge portion in the vicinity of the inner cylinder at the axial end face of the vibration-isolating base body such that the convex streak is formed to extend in the circumferential direction along an outer peripheral edge of the inner cylinder and to project in the axial direction beyond the axial end face of the inner cylinder, and is axially compressed by the abutting disposition of the abutment member on the axial end face of the inner cylinder.

2. The vibration isolation device as set forth in claim 1, **characterized in that** a cutout portion is provided over the full circumference on the outer peripheral surface of at least the one axially end portion of the inner cylinder; and the convex streak is provided at the axial end face of the vibration-isolating base body on the side where the cutout portion is provided.

3. The vibration isolation device as set forth in claim 2, **characterized in that** the inner cylinder is provided, at the one axial end thereof, with the cutout portion and is formed, at the other axial end thereof, to be gradually larger in outside diameter toward its tip end.

4. The vibration isolation device as set forth in claim 2 or 3, **characterized in that** given that a height in the axial direction of the convex streak projecting from the end face of the inner cylinder is H1 and a breadth in the axial direction of the cutout portion formed from the end face of the inner cylinder is H2, the ratio of H2/H1 is set within the range of 1 to 3.

5. The vibration isolation device as set forth in any one of claims 1 to 4, **characterized in that** the abutment member is a stopper member limiting axial displacement of the inner cylinder to the outer periphery member.

6. The vibration isolation device as set forth in any one of claims 1 to 5, **characterized in that** the inner cylinder is attached to a side of a vibrating body, with its axial direction oriented in the vertical direction; the outer periphery member is provided with an opening surrounding the inner cylinder and attached to a side of a support body; the vibration-isolating base body is interposed between the inner cylinder and the opening of the outer periphery member to resiliently support the inner cylinder in the vertical direction relative to the outer periphery member.

7. The vibration isolation device as set forth in claim 6, **characterized in that** a cylindrical portion is extended downwardly from an opening edge of the opening of the outer periphery member;
the abutment member includes an abutment face portion disposed to abut on the lower end face of the inner cylinder, an inner cylindrical portion extended downwardly from a peripheral edge portion of the abutment face portion and disposed to opposite to and internally of the cylindrical portion of the outer periphery member, and an extension portion provided at the lower end of the inner cylindrical portion and extending downwardly of the cylindrical portion of the outer periphery member to be directed outwardly;
a first stopper rubber is provided between the cylindrical portion of the outer periphery member and the inner cylindrical portion of the abutment member and a void is ensured in the normal direction to the axis, thereby forming a first stopper limiting displacements in the horizontal direction of the inner cylinder and the outer periphery member;
a second stopper rubber is provided between a lower end of the cylindrical portion of the outer periphery member and the extension portion of the abutment member and a void is ensured in the axial direction, thereby forming a second stopper limiting upward displacement of the inner cylinder relative to the outer periphery member.
